# FASCICULE DE BREVET EUROPEEN

(11) **EP 1 307 798 B1**
(45) Date de publication et mention de la délivrance du brevet: **26.08.2009**
(21) Numéro de dépôt: 01955415.3
(22) Date de dépôt: 12.07.2001
(51) Int. Cl.: G05D 1/00

(54) **PROCEDE ET DISPOSITIF DE COMMANDE D'ORGANES DE MANOEUVRE D'UN AERONEF, A MODULES DE SECOURS ELECTRIQUES**
VERFAHREN UND VORRICHTUNG ZUR STEUERUNG DER STEUERORGANE EINES LUFTFAHRZEUGES MIT ELEKTRISCHEN NOTLAUFMODULEN
METHOD AND DEVICE FOR CONTROLLING AIRCRAFT MANOEUVRING COMPONENTS WITH ELECTRICAL EMERGENCY OPERATION MODULES

(30) Priorité: 13.07.2000 FR 0009196
(43) Date de publication de la demande: 07.05.2003
(73) Titulaire: AIRBUS France, 31060 Toulouse (FR)
(72) Inventeur: ORTEGA, Jean-Marc, F-31700 Blagnac (FR); GARCIA, Jean-Pierre, F-31770 Colomiers (FR)
(74) Mandataire: Weber, Etienne Nicolas
(86) Numéro de dépôt international: PCT/FR2001/002275
(87) Numéro de publication internationale: WO 2002/006908

(56) Documents cités:
- EP-A- 0 864 491
- US-A- 5 560 570
- US-A- 6 059 225

## Description

### Domaine technique

La présente invention concerne un procédé et un dispositif de commande d'organes de manoeuvre d'un aéronef.

L'invention trouve des applications notamment dans la commande sécurisée d'organes de manoeuvre tels que les gouvernes de direction, les gouvernes de profondeur, les déflecteurs d'aérofreins, les empennages à incidence réglable, ainsi que les systèmes de freinage agissant sur le train d'atterrissage, par exemple.

### Etat de la technique antérieure

Sur un aéronef, un certain nombre d'organes de manoeuvre sont considérés comme critiques pour assurer la sécurité de l'évolution de l'appareil, tant au sol qu'en vol. Le système de commande pour ces organes doit présenter un haut degré de fiabilité et de disponibilité. En d'autres termes, la commande doit être préservée même en cas de panne d'un ou de plusieurs composants du système, afin d'assurer, au minimum, le poursuite du vol et de l'atterrissage.

A cet effet, on associe généralement à chaque organe de manoeuvre critique au moins un système de commande principal et un système de commande de secours.

Sur un certain nombre d'appareils on utilise un système de commande principal électrique associé à un système de secours mécanique. Tel est le cas, par exemple, pour les avions de type Airbus A320, A330 ou A340. Sur ces appareils, la commande de secours pour le plan horizontal réglable, de même que pour la direction, est de type mécanique. Plus précisément, des actionneurs à entrée électrique pilotent les entrées mécaniques des actionneurs associés au plan horizontal réglable, et des actionneurs de direction, par l'intermédiaire d'un système de timonerie.

Outre le manque de précision dont pourrait souffrir une commande incluant un système de timonerie, les commandes mécaniques demandent une maintenance fréquente pour assurer l'absence de toute panne cachée.

Sur les avions du type mentionné ci-dessus, il existe également une commande de secours de type hydraulique utilisée pour le système de freinage. Dans le système de freinage de secours, les pédales de frein, actionnables par le pilote, agissent sur des maîtres-cylindres qui commandent les mâchoires de frein par l'intermédiaire d'un circuit hydraulique à basse pression.

Un tel système de secours n'est pas à l'abri d'une avarie telle qu'une fuite de la transmission hydrostatique et nécessite donc également une vérification fréquente.

Pour éviter les contraintes des systèmes de commande à secours mécanique ou hydraulique, une commande de secours électrique peut également être prévue. A titre d'exemple, sur les avions A320, A330 et A340 mentionnés précédemment, la transmission des ordres de pilotage entre l'organe de pilotage et les actionneurs de gouverne est assurée par l'intermédiaire d'une pluralité de calculateurs. Les calculateurs font partie de deux unités de calcul appelées unités primaire et secondaire, dont l'une peut être considérée comme une unité de secours. Les calculateurs des deux unités de calcul sont de conception et d'origine différentes pour réduire le risque d'une erreur de conception commune aux deux unités.

Chaque calculateur est conçu pour pouvoir détecter lui-même toute panne qui affecterait son propre fonctionnement. Il présente à cet effet une structure duplex de type commande/surveillance, avec une chaîne de commande qui établit des signaux de commande pour les actionneurs des gouvernes et une chaîne de surveillance qui surveille la chaîne de commande. En cas de désaccord entre les deux chaînes, l'unité de calcul correspondante prend un état inactif de façon que la deuxième unité de calcul puisse prendre la commande des gouvernes.

Le document FR-A-2593774 décrit un dispositif de commande d'une gouverne dans lequel la commande de secours mécanique traditionnelle est remplacée par un système de secours électro-optique. Dans ce dispositif, le fonctionnement du système de secours est indépendant du système de commande électrique principal. Il n'est toutefois pas actif en cas de fonctionnement normal du système principal.

Pour garantir le bon fonctionnement d'un tel dispositif, deux solutions sont a priori envisageables. Comme le système de secours n'est pas actif en vol normal, une première solution consiste à effectuer des tests réguliers au sol, notamment au cours de services de maintenance. Une deuxième solution, retenue dans le document, consiste à équiper le système de secours d'une structure duplex telle que décrite précédemment, c'est à dire une structure de type commande/surveillance. Ainsi, en cas de défaillance de la voie de commande du système de secours, la panne peut être détectée par la voie de surveillance du système de secours.

La deuxième solution permet de détecter, en vol, toute défaillance du système de commande de secours, mais augmente considérablement sa complexité.

De façon générale, les dispositifs de commande, connus dans l'état de la technique, présentent des difficultés liées à la fiabilité et/ou aux exigences de maintenance des systèmes de commande de secours. Ces difficultés sont surmontées, au moins en partie, en dotant chaque système de secours d'une structure permettant son propre contrôle autonome en vol. De telles structures sont cependant très coûteuses et complexes.

### Exposé de l'invention

L'invention a pour but de proposer un procédé et un dispositif de commande d'organes de manoeuvre, pour un aéronef, ne présentant pas les difficultés mentionnées ci-dessus.

Un but est en particulier de proposer un tel dispositif qui permette d'atteindre un haut degré de fiabilité tout en présentant une structure relativement simple et peu coûteuse comparativement aux dispositifs connus.

Un autre but est de garantir le bon fonctionnement du dispositif tout en évitant des procédures de test et de maintenance au sol des commandes de secours.

Un but est enfin de conserver une grande autonomie des commandes principales et de secours.

Pour atteindre ces buts l'invention a plus précisément pour objet un dispositif de commande d'organes de manoeuvre d'un aéronef comportant :
- des moyens de commande, actionnables par un pilote pour délivrer des ordres de manoeuvre,
- au moins une unité de calcul centrale apte à établir des signaux de commande pour au moins un organe de manoeuvre à partir desdits ordres de manoeuvre, chaque unité de calcul centrale étant pourvue d'un système de détection de panne propre.

Conformément à l'invention, le dispositif comporte en outre au moins un module électronique, associé à un organe de manoeuvre, et apte à établir également des signaux de commande pour cet organe de manoeuvre à partir desdits ordres de manoeuvre. Le module électronique est dépourvu de système de détection de panne propre, mais est relié à un système central de détection de pannes.

Chaque module électronique est associé de préférence à un seul organe de manoeuvre, mais peut aussi être associé à plusieurs organes de manoeuvre.

On entend par organe de manoeuvre tout organe permettant de gouverner l'évolution de l'aéronef en vol ou au sol. Il s'agit en particulier d'organes tels que les surfaces mobiles ou les mécanismes de freinage.

Comme les modules électroniques locaux sont dépourvus de systèmes de détection de panne propres ceux-ci peuvent présenter une structure simplifiée par rapport aux systèmes de secours traditionnels. L'existence d'un système central de détection de pannes, qui peut être commun à un grand nombre de modules de secours, permet cependant de les affranchir des exigences de tests de bon fonctionnement effectués au sol.

Dans une réalisation particulière, l'unité de calcul centrale est programmée pour établir les signaux de commande selon une loi dite loi élaborée, et chaque module électronique de secours est programmé selon au moins une loi, dite loi simplifiée, différente de la loi élaborée et plus simple que celle-ci.

Les modules électroniques, qui peuvent, par exemple, élaborer des signaux de commande selon de simples lois proportionnelles, présentent un encombrement particulièrement réduit. Ils peuvent alors être facilement répartis dans l'aéronef, en fonction des organes de manoeuvre qu'ils gouvernent , par exemple à proximité des actionneurs de ces organes.

L'unité de calcul centrale peut éventuellement être destinée à un unique organe de manoeuvre, cependant dans une mise en oeuvre préférée de l'invention l'unité centrale est associée à une pluralité voire à l'ensemble des organes de manoeuvre de l'aéronef.

Selon un perfectionnement avantageux de l'invention, le système de détection de panne central peut être l'un des calculateurs de l'unité de calcul centrale. Ceci permet de réaliser de façon très économique la fonction de détection de panne. Dans ce cas, les modules électroniques peuvent, par exemple, établir des ordres de commande sans que ceux-ci ne soient dirigés vers les actionneurs des organes de manoeuvre lors d'un fonctionnement normal de l'unité de calcul centrale. Toutefois, les ordres de commande établis peuvent êtres acheminés vers l'un au moins des calculateurs de l'unité centrale pour que ce calculateur puisse en vérifier continûment ou non, la conformité de ces ordres.

Pour accroître la fiabilité de l'unité centrale de calcul, celle-ci peut comporter au moins deux calculateurs redondants. Les calculateurs redondants sont de préférence de conception et d'origine différente.

Par ailleurs, les calculateurs peuvent présenter une structure de type duplex en étant équipés d'une première voie de calcul, appelée voie de commande, et d'une deuxième voie de calcul, appelée voie de surveillance. La voie de surveillance fait partie du système de détection de panne propre de l'unité de calcul centrale.

Pour éviter qu'une perturbation de fonctionnement ne soit transmise sur une éventuelle liaison existant entre les modules électroniques de secours et l'unité centrale de calcul, utilisée comme système de détection de pannes pour les modules, cette liaison peut comporter des moyens d'isolation galvanique tels que des moyens à opto-coupleurs, des moyens à transformateur, ou des moyens de filtre. La liaison peut aussi être réalisée par fibre optique pour éviter une connexion électrique entre les modules et l'unité centrale de calcul. Il est de plus possible de n'affecter qu'un seul des calculateurs de l'unité centrale de calcul à la détection des pannes des modules de secours, de sorte qu'une perturbation éventuellement transmise n'affecte que ce seul calculateur. Une autre précaution possible est enfin de prévoir une interruption de la surveillance des modules électroniques de secours dans certaines phases de vol telles que le décollage ou l'atterrissage.

Le dispositif décrit ci-dessus peut être utilisé en particulier pour la commande d'au moins un organe de manoeuvre choisi parmi :
- une gouverne de l'aéronef,
- un plan incliné réglable de l'aéronef, et
- un système de freinage de l'aéronef.

L'invention concerne également un procédé de commande d'organes de manoeuvre d'un aéronef susceptible d'être mis en oeuvre au moyen du dispositif décrit. Le procédé comprend :
- l'établissement de premiers signaux de commande pour une pluralité d'organes de manoeuvre au moyen d'au moins une unité centrale de calcul pourvue d'un système de détection de pannes propre,
- l'établissement de deuxièmes signaux de commande au moyen d'une pluralité de modules électroniques de secours associés respectivement à une pluralité d'organes de manoeuvre,
- la vérification du bon fonctionnement d'au moins un calculateur de l'unité de calcul centrale et l'acheminement des premiers signaux de commande vers les organes de manoeuvre lorsqu'un bon fonctionnement est constaté, et
- l'acheminement des deuxièmes signaux de commande respectivement vers les organes de manoeuvre associés aux modules électroniques, lorsqu'un dysfonctionnement de l'unité centrale de calcul est constaté.

Comme évoqué précédemment, la vérification du bon fonctionnement des modules électroniques peut être effectuée par un calculateur, de préférence unique, de l'unité de calcul centrale. La vérification peut être effectuée de façon continue ou périodique.

D'autres caractéristiques et avantages de l'invention ressortiront de la description qui va suivre en référence aux figures des dessins annexés. Cette description est donnée à titre purement illustratif et non limitatif.

### Brève description des figures

- La figure 1 est une représentation schématique d'un premier exemple de mise en oeuvre d'un dispositif conforme à l'invention, pour la commande d'une gouverne de direction d'un aéronef.
- Les figures 2,3 et 4 sont des représentations schématiques d'actionneurs utilisables avec un dispositif de commande conforme à l'invention, pour la commande d'organes de manoeuvre.
- La figure 5 est une représentation plus détaillée de certaines parties du dispositif de la figure 1.
- La figure 6 montre un autre exemple de réalisation des parties du dispositif de la figure 1.
- La figure 7 est une représentation schématique d'un deuxième exemple de réalisation d'un dispositif conforme à l'invention.
- La figure 8 est une représentation schématique d'un exemple de mise en oeuvre d'un dispositif conforme à l'invention appliqué à la commande d'un mécanisme de freinage.

### Description détaillée de modes de mise en oeuvre de l'invention

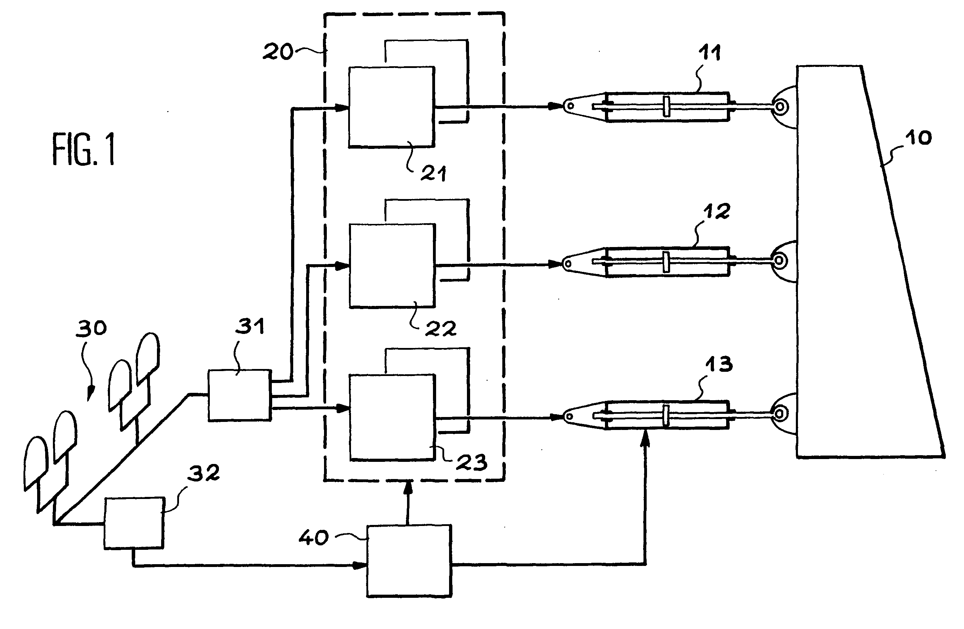

La figure 1 montre un dispositif de commande d'une gouverne 10 susceptible d'être mue par trois actionneurs 11, 12 et 13. Les actionneurs, dont la structure est décrite plus en détail dans la suite du texte, sont représentés de façon simplifiée. Ils reçoivent des signaux de commande établis par une unité de calcul centrale 20.

L'unité de calcul comprend trois calculateurs 21, 22 et 23 associés, dans l'exemple illustré, aux trois actionneurs redondants 11, 12 et 13. Les calculateurs peuvent chacun comprendre une structure double avec une voie de commande et une voie de surveillance. Ils établissent les signaux de commande à partir d'ordres de manoeuvre entrés par un pilote sur un ou plusieurs organes de commande tels qu'un palonnier 30. Par ailleurs, les différents calculateurs de l'unité centrale de calcul sont de préférence d'origine et de conception différente pour éviter qu'un même défaut de conception ne puisse influencer l'ensemble des calculateurs.

Bien que cela n'apparaisse pas sur la figure, les calculateurs peuvent recevoir des ordres d'une pluralité d'organe de commande (palonnier, manche etc.) et délivrer des signaux de commande à des actionneurs de plusieurs organes de manoeuvre (gouvernes...).

Dans l'exemple illustré, les ordres de manoeuvre sont plus précisément délivrés à l'unité de calcul centrale par des capteurs 31,32 associés au palonnier 30. L'unité de calcul reçoit par ailleurs un grand nombre de données diverses, établies par des capteurs qui ne figurent pas sur le dessin. Ces données sont représentatives des paramètres et conditions de vol de l'aéronef, et permettent d'élaborer les signaux de commande selon des lois de calcul complexes.

Les ordres de manoeuvre des capteurs 31, 32 du palonnier sont également délivrés à un module électronique indiqué sommairement avec la référence 40. Le module électronique est capable, tout comme l'unité centrale de calcul, d'établir des signaux de commande pour la gouverne 10. Ces signaux sont toutefois établis en tenant compte d'un plus petit nombre de paramètres et selon des lois de calcul plus simples. En particulier les signaux de commande peuvent être établis en fonction des ordres de commande selon une simple loi de proportionnalité. Il convient de noter que, contrairement à l'unité de calcul centrale, le module électronique de secours peut être prévu pour établir les signaux de commande que pour un seul organe de manoeuvre. Cette particularité peut permettre de localiser plus librement le module électronique dans l'aéronef, par exemple à proximité du ou des actionneurs commandés par le module.

Dans l'exemple de la figure 1 le module électronique 40 n'est relié qu'à un seul des actionneurs 13 de la gouverne 10.

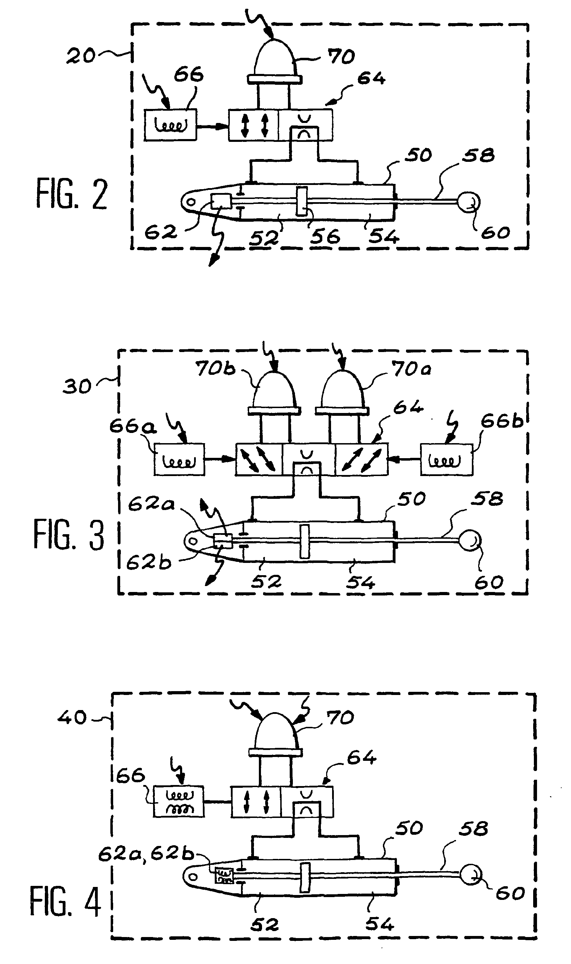

Les figures 2, 3 et 4 décrites ci-après montrent de façon plus détaillée la structure d'actionneurs utilisables pour la déflection d'une gouverne ou d'un quelconque organe de manoeuvre.

Les actionneurs comportent pour l'essentiel un cylindre 50 divisé en deux chambres 52, 54 par un piston mobile 56. Une des extrémités d'une tige du piston 58 est mécaniquement reliée à l'organe de manoeuvre (non représenté) en un point d'articulation 60. Une deuxième extrémité de la tige de piston est reliée à un capteur de position 62 utilisé pour effectuer un asservissement de position. L'actionneur de la figure 2 présente deux modes de fonctionnement sélectionnés par un tiroir de mode 64 actionné par une électrovanne 66. Dans une première position du tiroir de mode, qui est celle représentée sur la figure, les deux chambres du cylindre sont mises en communication de sorte qu'un fluide hydraulique contenu dans les chambres peut circuler d'une chambre à l'autre à travers un restricteur. Cette position correspond à un mode dit passif.

Dans une deuxième position du tiroir de mode, les chambres 52, 54 du cylindre sont mises en communication avec une servovalve 70 qui distribue dans les chambres un fluide hydraulique en fonction de signaux de commande électriques. Cette position correspond à un mode dit mode actif. Les signaux peuvent être fournis à la servovalve par une unité de calcul telle que l'unité de calcul centrale, ou par un module électronique tel qu'évoqué précédemment. Il en va de même pour les signaux de commande de l'électrovanne 66. Pour des raisons de simplification l'alimentation en puissance hydraulique de la servovalve n'est pas représentée. Par ailleurs, les entrées de commande électrique de l'électrovanne et de la servovalve sont simplement indiquées par des flèches tourmentées.

La figure 3 montre un actionneur pouvant fonctionner selon trois modes, correspondant à trois positions du tiroir de mode 64. Afin de faciliter la description de la figure 3, les parties de cette figure qui sont identiques, similaires ou équivalentes à celles de la figure 2, sont repérées avec les mêmes références numériques. Il est donc possible pour ces parties de se reporter à la description qui précède. Le tiroir de mode 64 comprend toujours une position de mode passif dans laquelle les chambres 52,54 du vérin sont mises en communication. Il comprend en outre deux positions correspondant à des modes actifs. Dans une première position de mode actif, les chambres du vérin sont mises en communication avec une première servovalve 70a. Dans une deuxième position de mode actif, les chambres du vérin sont mises en communication avec une deuxième servovalve 70b. On observe également que le tiroir de mode est commandé par deux électrovannes 66a et 66b.

La première servovalve 70a et la première électrovanne 66a reçoivent des signaux électriques, de l'unité de calcul centrale, tandis que la deuxième servovalve 70b et la deuxième électrovanne 66b reçoivent des signaux électriques du module électronique de secours. Une hiérarchie de commande des électrovannes est prévue et précisée dans la suite du texte.

On observe encore que le capteur de position est un capteur double à deux parties 62a et 62b destinées à fournir des données d'asservissement de position respectivement à l'unité de calcul centrale et au module électronique.

La figure 4, qui reprend également les mêmes références pour les parties identiques ou similaires à celles des figures précédentes, montre une troisième structure d'actionneur, également susceptible de recevoir des signaux de commande de deux sources différentes, mais qui ne dispose que d'un tiroir de mode 64 à deux positions. Les deux positions correspondent aux modes passif et actif. En revanche, la servovalve 70 et l'électrovanne 66 sont respectivement du type à double bobinage. Dans ce cas, les deux bobinages sont mutuellement isolés et chaque bobinage est respectivement relié à l'une des sources de signaux de commande, c'est-à-dire l'unité centrale de calcul et le module de secours. Les deux parties 62a,62b du capteur de position peuvent également être deux bobinages distincts et électriquement isolés.

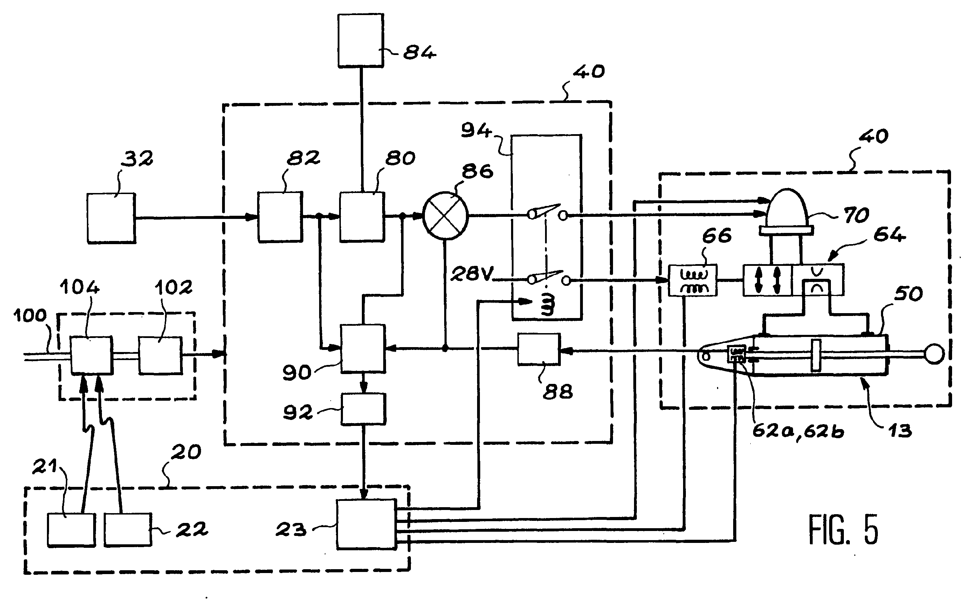

La figure 5, décrite ci-après, montre de façon plus détaillée le fonctionnement du module électronique de secours 40. Le coeur du module électronique 40 est formé par une unité de calcul 80, dite locale, prévue pour élaborer des signaux de commande de secours selon une loi de proportionnalité simple. Elle est reliée au capteur 32 du palonnier (ou d'un quelconque autre organe de manoeuvre), par l'intermédiaire d'une unité de lecture 82 des ordres de manoeuvre. Accessoirement, l'unité de calcul locale 80 peut aussi recevoir des données d'un capteur gyroscopique ou d'un accéléromètre. Ces capteurs sont symboliquement repérés avec la référence 84.

La sortie de l'unité de calcul locale 80, est dirigée vers un mélangeur 86 qui corrige le signal en fonction d'une position actuelle de la gouverne donnée par le capteur de position 62b de l'actionneur, et qui délivre les signaux de commande asservis, destinés à l'actionneur 13. La référence 88 désigne un lecteur de la position de la gouverne. Le lecteur 88 est connecté entre le capteur de position 62a, 62b et le mélangeur 86.

Le lecteur 88 est également relié à une unité de dialogue 90 prévue pour un échange de données entre l'unité centrale de calcul 20 et le module électronique de secours 40. L'unité de dialogue 90 est reliée à l'unité de calcul centrale 20 par un moyen d'isolation galvanique 92 tel qu'un optocoupleur, par exemple. Elle transmet à l'unité centrale de calcul, et plus précisément à l'un des calculateurs 23 de cette unité, les données de position délivrées par le capteur 62b évoqué ci dessus, mais aussi les signaux de commande élaborés par l'unité de calcul locale 80, et/ou du mélangeur 86, de façon à permettre une surveillance du module électronique par l'unité de calcul centrale. L'unité de calcul centrale peut vérifier en permanence ou de façon périodique le bon fonctionnement du module électronique de secours 40. Un commutateur 94 piloté par le calculateur 23 affecté à la surveillance du module, permet soit d'isoler les signaux de commande produits par le module 40 soit de les transmettre à l'actionneur 13.

Lors d'un fonctionnement normal, c'est à dire, dans l'exemple décrit, lorsque tous les calculateurs de l'unité de calcul centrale 20 ne sont pas en panne, le commutateur 94 est maintenu ouvert de sorte que l'actionneur 13, et plus précisément la servovalve 70, ne reçoivent des signaux de commande que de l'unité de calcul centrale.

Dans ce cas, le tiroir de mode 64 peut occuper soit un mode de fonctionnement passif dans lequel les chambres du vérin sont mises en communication, soit un mode actif.

On rappelle ici que le bon fonctionnement des calculateurs de l'unité de calcul centrale est autosurveillée par l'unité de calcul elle-même grâce à la structure de type duplex des calculateurs.

En revanche, lorsque tous les calculateurs de l'unité centrale de calcul tombent en panne, le commutateur 94 n'est plus maintenu ouvert. En se fermant il autorise la transmission directe des signaux de commande établis par le module électronique de secours vers l'actionneur 13.

On peut observer sur la figure 5 que le commutateur 94 est également relié à l'électrovanne de l'actionneur pour commander son mode de fonctionnement. L'électrovanne 66 se voit appliquer une tension (28 V) destinée à mettre le tiroir de mode 64 dans le mode actif.

Pour éviter une panne simultanée de l'unité centrale de calcul 20 et du module électronique de secours 40 en raison d'une coupure de leur alimentation en énergie, ces éléments sont de préférence alimentés à partir de sources d'énergie différentes et indépendantes. L'unité centrale de calcul 20 est alimentée par une source d'énergie électrique, et en l'occurrence le circuit d'alimentation électrique de l'aéronef. Le module électronique de secours 40 est alimenté par une source d'énergie d'origine hydraulique, c'est à dire à partir d'un circuit hydraulique 100 de l'aéronef. Un convertisseur 102 est prévu pour convertir l'énergie hydraulique fournie par le circuit 100 en énergie électrique utilisable par le module.

Une électrovanne 104 pilotée par l'unité de calcul centrale 20, et plus précisément par les calculateurs 21, 22 non affectés à la surveillance du module électronique, permet d'interrompre l'alimentation en fluide hydraulique du convertisseur 102 et donc de mettre hors service le module électronique.

Le module électronique peut ainsi être piloté, par exemple, de la façon suivante :
- Lorsque le module électronique de secours tombe en panne, c'est à dire lorsqu'il émet des signaux de commande jugés défectueux ou lorsqu'il n'émet pas de signaux, la panne est détectée par le calculateur 23 affecté à la surveillance du module et ce calculateur commande, par l'intermédiaire des deux autres calculateurs 21, 22, la coupure de l'alimentation en énergie du module ;
- lorsque tous les calculateurs de l'unité centrale sont en panne, le module de secours 40 est activé (ce point a été examiné précédemment) et
- lorsque le calculateur de surveillance 23 tombe en panne, et n'assure donc plus la vérification du bon fonctionnement du module de secours 40, les autres calculateurs de l'unité de calcul centrale coupent également l'alimentation en énergie du module électronique de secours.

Il convient de préciser que les liaisons existant entre les différentes parties décrites en référence à la figure 5 peuvent être des liaisons électriques ou des liaisons optiques, et que ces liaisons sont totalement ségréguées c'est-à-dire indépendantes et mutuellement isolées.

Finalement, comme l'électrovanne d'alimentation 104 est commandée par deux des calculateurs tandis que le troisième calculateur commande le commutateur 94 de transmission des signaux, chaque calculateur de l'unité centrale de calcul a la possibilité d'autoriser ou d'interdire l'utilisation du module électronique de secours.

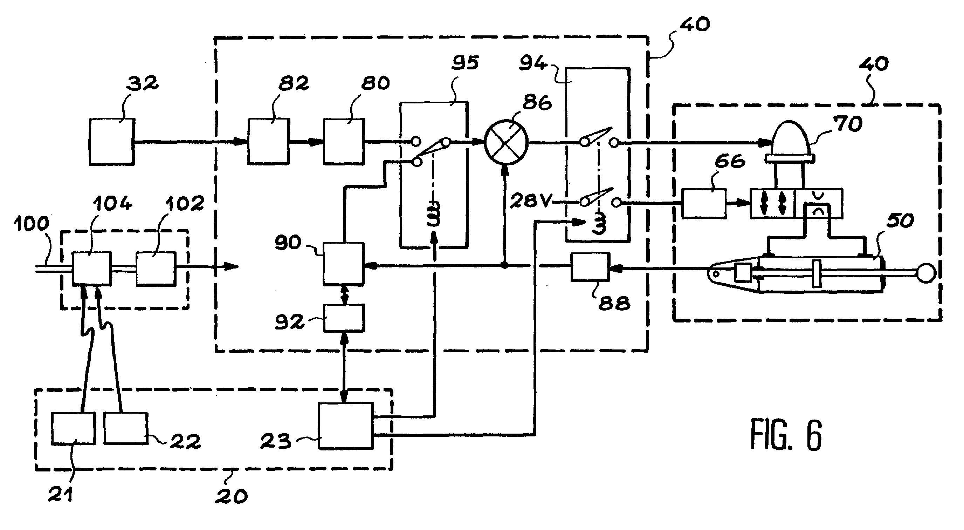

La figure 6, décrite ci-après, montre une autre réalisation possible du dispositif de commande. En raison d'un grand nombre de similitudes entre les éléments de la figure 5 et ceux de la figure 6, la description de ces éléments n'est pas répétée ici.

A la différence de la figure 5, on remarque sur la figure 6 que l'actionneur n'est plus du type de celui décrit en référence à la figure 4 mais du type décrit en référence à la figure 2. En d'autres termes, l'actionneur ne présente qu'une seule entrée de commande électrique tant pour la servovalve 70 que pour l'électrovanne 66. Par ailleurs, l'actionneur n'est relié qu'au module électronique de secours 40, sans lien direct avec l'unité de calcul centrale 20. En revanche, l'unité de dialogue 90 est conçue pour non seulement autoriser un transfert de données du module de secours 40 vers l'unité de calcul centrale 20, mais aussi pour recevoir de l'unité de calcul centrale des signaux de commande destinés à l'actionneur. Ainsi les signaux de commande établis par l'unité de calcul centrale ne sont pas acheminés directement vers l'actionneur mais le sont à travers le module électronique. Une telle réalisation est particulièrement adaptée lorsque le module électronique est disposé à proximité de l'actionneur ou est intégré à celui-ci.

Un commutateur additionnel 95, piloté par le calculateur 23, affecté à la surveillance du module électronique de secours, permet de diriger vers l'actionneur soit les signaux de commande établis par l'unité de calcul centrale 20 soit ceux établis par le calculateur local 80 du module électronique.

En cas de panne de l'unité de calcul centrale 20 le commutateur additionnel 95 n'est plus sollicité et dirige automatiquement les signaux établis par le calculateur local 80 vers l'actionneur.

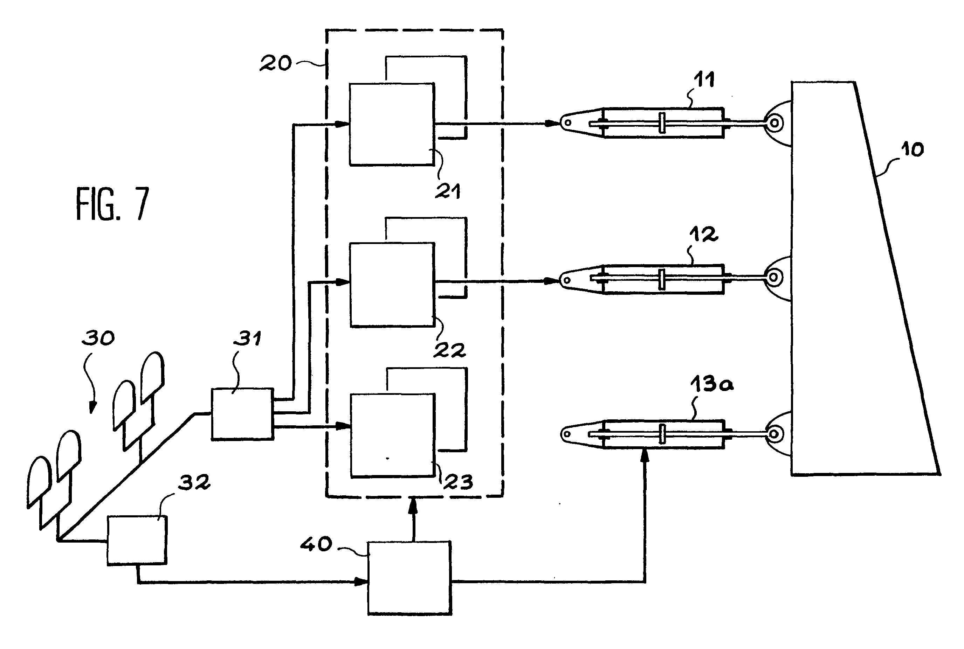

La figure 7 montre un dispositif de commande conforme à la figure 6 utilisé pour la commande d'une gouverne de direction. Les éléments de cette figure sont sensiblement les mêmes que ceux de la figure 1 et sont repérés avec les mêmes références numériques. La figure 7 montre que deux des actionneurs sont exclusivement réservés pour être commandés par l'unité centrale de calcul. Il s'agit des actionneurs 11 et 12, tandis que le troisième actionneur 13a n'est piloté que par le module électronique de secours 40. Une architecture conforme à la figure 7 n'empêche aucunement un contrôle permanent ou occasionnel du bon fonctionnement du module électronique de secours de la façon décrite précédemment. Toutefois lorsque les signaux de commande du module de secours ne sont pas adressés à l'actionneur 13a, celui-ci est placé dans le mode passif.

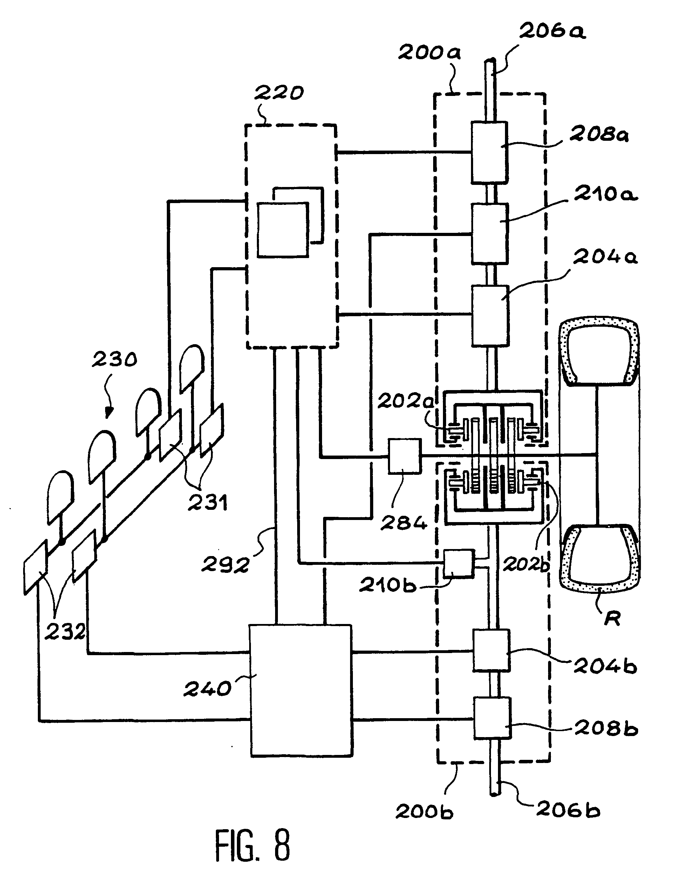

La figure 8, décrite ci-après, illustre une autre application possible d'un dispositif de commande conforme à l'invention. Le dispositif de la figure 8 concerne un mécanisme de freinage et en particulier un mécanisme de freinage pour un aéronef.

Sur un aéronef, chaque roue ou train de roues peut être freiné de façon individuelle et peut comporter plusieurs dispositifs de freinage. Dans l'exemple décrit, le mécanisme de freinage comporte deux dispositifs repérés respectivement avec les références 200a et 200b. Chaque dispositif de freinage comporte au moins une mâchoire 202a, 202b capable d'appliquer un premier jeu de disques, dit "de stator", solidaire de la jambe du train d'atterrissage, contre un deuxième jeu de disques, dit "de rotor", solidaire de la ou des roues R en rotation.

Les dispositifs de freinage comportent en outre chacun une valve 204a,204b reliée respectivement à des circuits hydrauliques 206a,206b pour exercer une force de freinage sur les mâchoires par l'intermédiaire de pistons non représentés. Les valves sont reliées aux circuits hydrauliques par l'intermédiaire respectivement d'une électrovanne 208a,208b capable de couper la pression hydraulique en cas de panne ou de fuite. Les valves sont par exemple du type servovalve ou à commande directe (DDV/Direct Drive Valve).

La commande des dispositifs de freinage 200a et 200b de la figure 8 est respectivement assurée par une unité de calcul 220, comparable à l'unité centrale de calcul des applications décrites précédemment, et par un module électronique de secours 240.

L'unité de calcul 220 et le module de secours 240 sont connectés à des capteurs d'ordres de freinage et de braquage 231, 232 d'un organe de commande 230 (pédales de frein), pour recevoir des ordres de commande de braquage ou de freinage. A partir de ces ordres ils élaborent des signaux de commande destinés essentiellement aux valves mais aussi aux électrovannes.

Les signaux élaborés par le module électronique de secours 240 peuvent encore résulter d'une simple loi de calcul de proportionnalité. En revanche, les signaux élaborés par l'unité de calcul 220, peuvent répondre à une loi de calcul plus sophistiquée tenant compte par exemple de données tachymétriques données par un capteur 284 de vitesse de rotation des roues. Ces données permettent d'établir des signaux de commande avec une fonction d'anti-patinage des roues.

Une connexion 292 est utilisée pour un échange de données entre l'unité de calcul 220 et le module électronique de secours 240 et en particulier pour effectuer la surveillance du bon fonctionnement du module de secours au moyen de l'unité de calcul 220. L'unité de calcul 220 comporte en revanche plusieurs calculateurs, ou tout au moins des calculateurs avec des voies autonomes de commande et de surveillance, de façon à effectuer son propre contrôle de fonctionnement, conformément à l'invention.

En fonctionnement normal, seuls les signaux de commande fournis par l'unité de calcul 220 sont transmis à la valve 204a du premier dispositif de freinage. En cas de panne de la commande « normale » et en particulier en cas de panne de l'unité de calcul 220, l'électrovanne n'est plus sollicitée et dépressurise le premier dispositif de freinage 200a.

La dépressurisation est alors détectée par un capteur de pression 210a du premier dispositif de freinage et le module électronique relié à ce capteur transmet ses signaux de commande au deuxième dispositif de freinage 200b.

En cas de panne du module électronique de secours, l'unité de calcul 220 signale la panne à l'équipage, garde la commande et de ce fait interdit la mise en service du deuxième dispositif de freinage.

Un capteur de pression 210b est relié à l'unité de calcul 220 et sert à détecter le bon fonctionnement de la chaîne de secours lors d'une séquence de test avant l'atterrissage. Cette séquence de test peut être commandée par l'unité de calcul 220 à travers la liaison 292.

## Revendications

1. Dispositif de commande d'organes de manoeuvre d'un aéronef comportent :
- au moins un organe (30, 230) de commande, actionnable par un pilote pour délivrer des ordres de manoeuvre,
- au moins une unité de calcul centrale (20, 220) apte à établir des signaux de commande pour au moins un organe de manoeuvre (10, R) à partir desdits ordres de manoeuvre, chaque unité de calcul centrale étant pourvue d'un système de détection de panne propre,
**caractérisé en ce qu'**il comporte en outre au moins un module électronique de secours (40, 240), associé à au moins un organe de manoeuvre, et apte à établir également des signaux de commande pour ledit organe de manoeuvre à partir desdits ordres de manoeuvre, ledit module électronique étant dépourvu de système de détection de panne propre, mais relié à un système central de détection de panne.

2. Dispositif selon la revendication 1, dans lequel l'unité de calcul centrale est apte à établir des signaux de commande pour une pluralité d'organes de manoeuvre (10).

3. Dispositif selon la revendication 2, dans lequel le système de détection de panne central, est un calculateur (23) de l'unité de calcul centrale (20).

4. Dispositif selon la revendication 1, dans lequel l'unité de calcul centrale (20) est programmée pour établir les signaux de commande selon une loi dite loi élaborée, et dans lequel chaque module électronique (40) est programmé selon au moins une loi dite loi simplifiée, différente de la loi élaborée.

5. Dispositif selon la revendication 4, dans lequel la loi simplifiée est une loi de type proportionnelle.

6. Dispositif selon la revendication 1, dans lequel l'unité de calcul centrale (20) comporte au moins deux calculateurs redondants (21, 22, 23), les calculateurs redondants étant de conception et d'origine différente.

7. Dispositif selon la revendication 1, dans lequel l'unité de calcul centrale (20) comporte au moins un calculateur avec une structure de type duplex, équipé d'une première voie de calcul appelée voie de commande et d'une deuxième voie de calcul appelée voie de surveillance, la voie de surveillance faisant partie du système de détection de panne propre.

8. Dispositif selon la revendication 1, dans lequel l'unité de calcul centrale (20) est reliée aux organes de manoeuvre par l'intermédiaire des modules électroniques (40).

9. Dispositif selon la revendication 3, dans lequel chaque module électronique (40) est relié à l'unité de calcul centrale par l'intermédiaire de moyens d'isolation galvanique (92).

10. Dispositif selon la revendication 1, dans lequel l'unité de calcul centrale (20) et les modules électroniques de secours (40) sont respectivement reliées à des sources d'alimentation électrique distinctes et autonomes.

11. Utilisation d'un dispositif selon l'une quelconque des revendications précédentes, pour la commande d'au moins un organe de manoeuvre choisi parmi :
- une gouverne de l'aéronef,
- un plan incliné réglable de l'aéronef, et
- un mécanisme de freinage de l'aéronef.

12. Procédé de commande d'organes de manoeuvre d'un aéronef comprenant :
- l'établissement de premiers signaux de commande d'une pluralité d'organes de manoeuvre au moyen d'au moins une unité centrale de calcul (20, 220) pourvue d'un système propre de détection de pannes,
- l'établissement de deuxièmes signaux de commande au moyen d'une pluralité de modules électroniques de secours (40, 240) associés respectivement à la pluralité d'organes de manoeuvre,
- la vérification du bon fonctionnement d'au moins un calculateur de l'unité de calcul centrale (20, 220) et l'acheminement des premiers signaux de commande vers les organes de manoeuvre lorsqu'un bon fonctionnement est constaté, et
- l'acheminement des deuxièmes signaux de commande respectivement vers les organes de manoeuvre associés aux modules électroniques lorsqu'un dysfonctionnement est constaté.

13. Procédé selon la revendication 12, comprenant en outre la vérification du bon fonctionnement des modules électroniques (40, 240) au moyen de l'unité de calcul centrale (20, 220).

14. Procédé selon la revendication 13, dans lequel la vérification du bon fonctionnement est effectuée par un unique calculateur (23) choisi parmi plusieurs calculateurs de l'unité de calcul centrale (20) .

15. Procédé selon la revendication 13, dans lequel la vérification du bon fonctionnement est effectuée de façon continue.

16. Procédé selon la revendication 13, dans lequel la vérification du bon fonctionnement est effectuée de façon périodique.

## Claims

1. A device for controlling maneuvering units of an aircraft including:
- at least one control unit (30, 230) which may be actuated by a pilot for issuing maneuvering commands,
- at least one central computing unit (20, 220) capable of establishing control signals for at least one maneuvering unit (10, R) from said maneuvering commands, each central computing unit being provided with its own failure detection system,
**characterized in that** it further includes at least one backup electronic module (40, 240), associated with at least one maneuvering unit, and capable of also establishing control signals for said maneuvering unit from said maneuvering commands, said electronic module lacking any failure detection system of its own, but connected to a central failure detection system.

2. The device according to claim 1, wherein the central computing unit is capable of establishing control signals for a plurality of maneuvering units (10).

3. The device according to claim 2, wherein the central failure detection system is a computer (23) of the central computing unit (20).

4. The device according to claim 1, wherein the central computing unit (20) is programmed in order to establish control signals according to a law, called an elaborate law, and wherein each electronic module (40) is programmed according to at least one law, a so-called simplified law, different from the elaborate law.

5. The device according to claim 4, wherein the simplified law is a proportional type law.

6. The device according to claim 1, wherein the central computing unit (20) includes at least two redundant computers (21, 22, 23), the redundant computers being of a different design and origin.

7. The device according to claim 1, wherein the central computing unit (20) includes at least one computer with a duplex type structure, equipped with a first computing channel called a control channel and with a second computing channel called a monitoring channel, the monitoring channel being part of the actual failure detection system.

8. The device according to claim 1, wherein the central computing unit (20) is connected to maneuvering units via electronic modules (40).

9. The device according to claim 3, wherein each electronic module (40) is connected to the central computing unit via galvanic insulation means (92).

10. The device according to claim 1, wherein the central computing unit (20) and the backup electronic modules (40) are respectively connected to distinct and self-contained electrical power supply sources.

11. The use of a device according to any of the preceding claims, for controlling at least one maneuvering unit selected from:
- a control surface of the aircraft,
- an adjustable inclined plane of the aircraft, and
- a braking mechanism of the aircraft.

12. A method for controlling maneuvering units of an aircraft consisting of:
- establishing first control signals of a plurality of maneuvering units by means of at least one central computing unit (20, 220) provided with its own failure detection system,
- establishing second control signal by means of a plurality of backup electronic modules (40, 240) respectively associated with the plurality of maneuvering units,
- checking for proper operation of at least one computer of the central computing unit (20, 220) and forwarding of the first control signals to the maneuvering units when proper operation is ascertained, and
- forwarding of the second control signals to the maneuvering units associated with the electronic modules, respectively when a malfunction is ascertained.

13. The method according to claim 12, further comprising the checking for proper operation of the electronic modules (40, 240) by means of the central computing unit (20, 220).

14. The method according to claim 13, wherein the checking for proper operation is performed by a single computer (23) selected from several computers of the central computing unit (20).

15. The method according to claim 13, wherein the checking for proper operation is performed continuously.

16. The method according to claim 13, wherein the checking for proper operation is performed periodically.

## Patentansprüche

1. Vorrichtung zur Steuerung bzw. Betätigung von Steuerorganen eines Luftfahrzeugs, umfassend:
- mindestens ein Steuerorgan (30, 230), das durch einen Piloten betätigt werden kann, zur Erteilung von Steuerbefehlen,
- mindestens eine zentrale Recheneinheit (20, 220), die Steuersignale für mindestens ein Steuerorgan (10, R) ausgehend von den Steuerbefehlen liefern kann, wobei jede zentrale Recheneinheit mit einem passenden Störungsanzeigesystem ausgestattet ist,
**dadurch gekennzeichnet, dass** die Vorrichtung mindestens ein elektronisches Notlaufmodul (40, 240) umfasst, das mit mindestens einem Steuerorgan verbunden ist und ebenfalls Steuersignale für das Steuerorgan ausgehend von den Steuerbefehlen liefern kann, wobei das elektronische Modul kein passendes Störungsanzeigesystem aufweist, jedoch mit einem zentralen Störungsanzeigesystem verbunden ist.

2. Vorrichtung nach Anspruch 1, wobei die zentrale Recheneinheit Steuersignale für mehrere Steuerorgane (10) liefern kann.

3. Vorrichtung nach Anspruch 2, wobei das zentrale Störungsanzeigesystem ein Rechner (23) der zentralen Recheneinheit (20) ist.

4. Vorrichtung nach Anspruch 1, wobei die zentrale Recheneinheit (20) derart programmiert ist, dass Steuersignale nach einem als kompliziertes Gesetz bezeichneten Gesetz geliefert werden, und wobei jedes elektronische Modul (40) nach mindestens einem als vereinfachtes Gesetz bezeichneten Gesetz, das von dem komplizierten Gesetz verschieden ist, programmiert ist.

5. Vorrichtung nach Anspruch 4, wobei das vereinfachte Gesetz ein Gesetz des Proportionaltyps ist.

6. Vorrichtung nach Anspruch 1, wobei die zentrale Recheneinheit (20) mindestens zwei redundante Rechner (21, 22, 23) umfasst, wobei die redundanten Rechner eine unterschiedliche Gestaltung und einen unterschiedlichen Ansatzpunkt aufweisen.

7. Vorrichtung nach Anspruch 1, wobei die zentrale Recheneinheit (20) mindestens einen Rechner mit einer Struktur des Duplextyps umfasst, der mit einem als Steuerweg bezeichneten ersten Rechenweg und einem als Überwachungsweg bezeichneten zweiten Rechenweg ausgestattet ist, wobei der Überwachungsweg einen Teil des passenden Störungsanzeigesystems bildet.

8. Vorrichtung nach Anspruch 1, wobei die zentrale Recheneinheit (20) mittels elektronischer Module (40) mit den Steuerorganen verbunden ist.

9. Vorrichtung nach Anspruch 3, wobei jedes elektronische Modul (40) mit der zentralen Recheneinheit über Mittel zur galvanischen Isolation (92) verbunden ist.

10. Vorrichtung nach Anspruch 1, wobei die zentrale Recheneinheit (20) und die elektronischen Notlaufmodule (40) jeweils mit verschiedenen und unabhängigen Stromversorgungsquellen verbunden sind.

11. Verwendung einer Vorrichtung nach einem der vorhergehenden Ansprüche zur Steuerung von mindestens einem Steuerorgan, das ausgewählt ist aus:
- einem Leitwerk des Luftfahrzeugs,
- einer verstellbaren schrägen Fläche des Luftfahrzeugs und
- einem Bremsmechanismus des Luftfahrzeugs.

12. Verfahren zur Steuerung bzw. Betätigung von Steuerorganen eines Luftfahrzeugs, umfassend:
- das Liefern von ersten Steuersignalen von mehreren Steuerorganen mittels mindestens einer zentralen Recheneinheit (20, 220), die mit einem passenden System zur Anzeige von Störungen ausgestattet ist,
- das Liefern von zweiten Steuersignalen mittels mehreren elektronischen Notlaufmodulen (40, 240), die jeweils mit den mehreren Steuerorganen in Verbindung stehen,
- das Überprüfen des guten Funktionierens von mindestens einem Rechner der zentralen Recheneinheit (20, 220) und das Weiterleiten der ersten Steuersignale zu den Steuerorganen, sobald ein gutes Funktionieren festgestellt ist, und
- das Weiterleiten der jeweiligen zweiten Steuersignale zu den mit den elektronischen Modulen in Verbindung stehenden Steuerorganen, sobald eine Funktionsstörung festgestellt ist.

13. Verfahren nach Anspruch 12, das ferner die Überprüfung des guten Funktionierens der elektronischen Module (40, 240) mittels der zentralen Recheneinheit (20, 220) umfasst.

14. Verfahren nach Anspruch 13, wobei die Überprüfung des guten Funktionierens durch einen einzigen Rechner (23) durchgeführt wird, der aus mehreren Rechnern der zentralen Recheneinheit (20) ausgewählt ist.

15. Verfahren nach Anspruch 13, wobei die Überprüfung des guten Funktionierens kontinuierlich durchgeführt wird.

16. Verfahren nach Anspruch 13, wobei die Überprüfung des guten Funktionierens periodisch durchgeführt wird.
